(19) 

Europäisches Patentamt
European Patent Office
Office européen des brevets

(11) **EP 2 017 448 A1**

(12) **EUROPÄISCHE PATENTANMELDUNG**

(43) Veröffentlichungstag:
  **21.01.2009 Patentblatt 2009/04**

(51) Int Cl.:
  *F02B 29/04* *(2006.01)*   *F02M 25/07* *(2006.01)*

(21) Anmeldenummer: 07112547.0

(22) Anmeldetag: **16.07.2007**

(84) Benannte Vertragsstaaten:
  **AT BE BG CH CY CZ DE DK EE ES FI FR GB GR HU IE IS IT LI LT LU LV MC MT NL PL PT RO SE SI SK TR**
  Benannte Erstreckungsstaaten:
  **AL BA HR MK RS**

(71) Anmelder: **Ford Global Technologies, LLC Dearborn, MI 48126 (US)**

(72) Erfinder:
  • **Kindl, Helmut**
    **52066, Aachen (DE)**

• **Schorn, Norbert**
  **52080, Aachen (DE)**
• **Spaeder, Uwe**
  **52072 Aachen (DE)**
• **Smiljanovski, Vanco**
  **50181, Bedburg (DE)**
• **Stalman, Rob**
  **52538, Selfkant (DE)**

(74) Vertreter: **Drömer, Hans-Carsten**
  **Ford-Werke Aktiengesellschaft**
  **Patentabteilung NH/DRP**
  **Henry-Ford-Strasse 1**
  **50725 Köln (DE)**

(54) **Abgasturbolader zum Aufladen einer Brennkraftmaschine und Verfahren zum Aufladen einer Brennkraftmaschine unter Verwendung eines derartigen Abgasturboladers**

(57)   Die Erfindung betrifft einen Abgasturbolader mit einem Verdichter (1) zum Komprimieren von Frischluft für eine aufgeladene Brennkraftmaschine, wobei der Verdichter (1) ein Gehäuse (3), einen Eintritt (4) für die zu verdichtende Frischluft und einen Austritt (5) für die verdichtete Frischluft aufweist.

Des Weiteren betrifft die Erfindung ein Verfahren zum Komprimieren von Frischluft für eine aufgeladene Brennkraftmaschine unter Verwendung eines derartigen

Abgasturboladers.

Es soll ein Abgasturbolader der oben genannten Art bereitgestellt werden, mit dem höhcrc Ladedrücke generiert werden können als nach dem Stand der Technik und dies, ohne daß der Aufbau von Ablagerungen im Verdichter (1) zunimmt.

Erreicht wird dies mit einem Abgasturbolader, der dadurch gekennzeichnet ist, daß das Gehäuse (3) des Verdichters (1) eine Kühlung (6) zum Kühlen der Frischluft aufweist.

Fig. 1

**Beschreibung**

Die Erfindung betrifft einen Abgasturbolader mit einem Verdichter zum Komprimieren von Frischluft für eine aufgeladene Brennkraftmaschine, wobei der Verdichter ein Gehäuse, einen Eintritt für die zu verdichtende Frischluft und einen Austritt für die verdichtete Frischluft aufweist.

Des Weiteren betrifft die Erfindung ein Verfahren zum Komprimieren von Frischluft für eine aufgeladene Brennkraftmaschine unter Verwendung eines Abgasturboladers der genannten Art.

Im Rahmen der vorliegenden Erfindung umfaßt der Begriff Brennkraftmaschine sowohl Dieselmotoren als auch Ottomotoren, insbesondere auch Hybrid-Brennkraftmaschinen.

Brennkraftmaschinen, die beispielsweise in unterschiedlichen Betriebspunkten der Brennkraftmaschine unterschiedliche Brennverfahren einsetzen, werden als Hybrid-Brennkraftmaschinen bezeichnet. Alternative Antriebskonzepte, beispielsweise Brennstoffzellen- oder Elektroantriebe, aber auch Konzepte, bei denen alternative Treibstoffe, insbesondere Erdgas oder Wasserstoff, zum Einsatz kommen, werden häufig in Kombination mit einer Brennkraftmaschine d.h. einer Verbrennungskraftmaschine eingesetzt. Diese Antriebskonzepte werden ebenfalls unter den Begriff "Hybrid-Brennkraftmaschine" subsumiert.

In den letzten Jahren hat sich eine Entwicklung hin zu kleinen, hochaufgeladenen Brennkraftmaschinen vollzogen, wobei die Aufladung in erster Linie ein Verfahren zur Leistungssteigerung ist, bei dem die für den motorischen Verbrennungsprozeß benötigte Luft verdichtet wird.

In der Regel wird für die Aufladung ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Ein typischer Vertreter der kleinen, hochaufgeladenen Motoren ist eine Brennkraftmaschine mit Abgasturboaufladung, bei der die Abgasenergie zur Verdichtung der Verbrennungsluft eingesetzt wird, und die zusätzlich über eine Ladeluftkühlung verfügt, mit der die komprimierte Verbrennungsluft vor Eintritt in den Brennraum runtergekühlt wird. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck $p_{me}$ gesteigert werden.

Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu günstigeren spezifischen Verbräuchen hin verschieben.

Die Aufladung unterstützt folglich das ständige Bemühen in der Entwicklung von Verbrennungsmotoren, aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, den Kraftstoffverbrauch zu minimieren, d. h. den Wirkungsgrad der Brennkraftmaschine zu verbessern.

Ein weiteres grundsätzliches Ziel ist es, die Schadstoffemissionen zu reduzieren. Bei der Lösung dieser Aufgabe kann die Aufladung der Brennkraftmaschine ebenfalls zielführend sein. Bei gezielter Auslegung der Aufladung können nämlich Vorteile im Wirkungsgrad und bei den Abgasemissionen erzielt werden. So können mittels geeigneter Aufladung beispielsweise beim Dieselmotor die Stickoxidemissionen ohne Einbußen beim Wirkungsgrad verringert werden. Gleichzeitig können die Kohlenwasserstoffemissionen günstig beeinflußt werden. Die Emissionen an Kohlendioxid, die direkt mit dem Kraftstoffverbrauch korrelieren, nehmen mit sinkendem Kraftstoffverbrauch ebenfalls ab. Die Aufladung eignet sich daher ebenfalls zur Reduzierung der Schadstoffemissionen.

Um die zukünftigen Grenzwerte für Schadstoffemissionen einzuhalten, sind aber darüber hinaus weitere Maßnahmen erforderlich, wobei neben dem Einsatz von Abgasnachbehandlungssystemen auch die Abgasrückführung d. h. die Rückführung heißer Abgase zielführend sein kann.

Die immer strengere Gesetzgebung bezüglich der Schadstoffemissionen von Kraftfahrzeugen stellt immer höhere Anforderungen an die Aufladung und die Abgasrückführung. Insbesondere besteht das Erfordernis, die im Rahmen der Aufladung mittels Verdichter generierten Prozeßdrücke zu erhöhen.

Nach dem Stand der Technik wird der Ladedruck eines Verdichters beispielsweise durch die zulässigen Prozeßtemperaturen beschränkt, insbesondere durch die thermisch zulässige Belastbarkeit des Verdichters, die sich aus den zur Herstellung des Verdichters verwendeten Materialien d.h. Werkstoffe ableitet. Grundsätzlich könnte dabei dem Erfordernis nach höheren Ladedrücken durch den Einsatz thermisch höher belastbarer Werkstoffe entsprochen d.h. nachgekommen werden.

Bei der Aufladung mittels Verdichter ist aber eine weitere Problematik zu berücksichtigen, der nicht durch den Einsatz alternativer Werkstoffe begegnet werden kann.

So kommt es im Verdichter zu Ablagerungen, die mit den im Verdichter vorliegenden Prozeßtemperaturen korrelieren, wobei mit zunehmender Temperatur auch die Ablagerungen im Verdichter zunehmen. Verursacht werden diese Ablagerungen insbesondere durch die Kurbelgehäuseentlüftung, die aufgrund des Blow-by erforderlich wird und mit der auch unverbrannte Kohlenwasserstoffe in die Ansaugleitung der Brennkraftmaschine zurückgeführt und damit dem in der Ansaugleitung angeordneten Verdichter zugeführt werden. Aber auch andere chemische Verbindungen lagern sind an den Innenwandungen des Verdichters und der Oberfläche des Laufzeuges ab und haben Einfluß auf die Fördercharakteristik des Verdichters.

Vor diesem Hintergrund ist es die Aufgabe der vorliegenden Erfindung, einen Abgasturbolader gemäß dem Oberbegriff des Anspruchs 1 d. h. der gattungsbildenden Art bereitzustellen, mit dem die nach dem Stand der Technik bekannten Nachteile überwunden werden und mit dem insbesondere hohe Ladedrücke generiert werden können, ohne daß die Ablagerungen im Verdichter zunehmen.

Eine weitere Teilaufgabe der vorliegenden Erfindung ist es, ein Verfahren zum Komprimieren von Frischluft für eine aufgeladene Brennkraftmaschine unter Verwendung eines derartigen Abgasturboladers aufzuzeigen.

Gelöst wird die erste Teilaufgabe durch einen Abgasturbolader mit einem Verdichter zum Komprimieren von Frischluft für eine aufgeladene Brennkraftmaschine, wobei der Verdichter ein Gehäuse, einen Eintritt für die zu verdichtende Frischluft und einen Austritt für die verdichtete Frischluft aufweist, der dadurch gekennzeichnet ist, daß das Gehäuse des Verdichters eine Kühlung zum Kühlen der Frischluft aufweist.

Der Verdichter des erfindungsgemäßen Abgasturboladers ist mit einer Kühlung ausgestattet. Im Gegensatz zu einer nach dem Stand der Technik stromabwärts des Verdichters angeordneten Ladluftkühlung wird die Ladeluft erfindungsgemäß bereits während der Verdichtung gekühlt. Auf diese Weise können wesentlich höhere Ladedrücke generiert werden, ohne daß thermisch höher belastbare Werkstoffe eingesetzt werden müssen.

Durch die Absenkung der Prozeßtemperatur bereits im Rahmen der Verdichtung werden insbesondere höhere Ladedrücke ermöglicht, ohne daß gleichzeitig erhöhte Ablagerungen toleriert d. h. in Kauf genommen werden müssen.

Der nach dem Stand der Technik bestehende Konflikt, nach welchem höhere Ladedrücke zwangsläufig zu höheren Prozeßtemperaturen führen, die wiederum den Ablagerungen Vorschub leisten, kann daher durch den Einsatz des erfindungsgemäßen Abgasturboladers aufgelöst werden.

Dadurch wird die erste der Erfindung zugrunde liegende Aufgabe gelöst, nämlich einen Abgasturbolader bereitzustellen, mit dem hohe Ladedrücke generiert werden können, ohne daß die Ablagerungen im Verdichter zunehmen.

Nichtsdestotrotz kann es vorteilhaft sein, stromabwärts des Verdichters des erfindungsgemäßen Abgasturboladers einen zusätzlichen Ladeluftkühler in der Ansaugleitung anzuordnen. Dieser Ladeluftkühler senkt die Temperatur der komprimierten Ladeluft weiter ab und steigert damit die Dichte der Ladeluft zusätzlich, wodurch eine nochmals bessere Füllung des Brennraums mit Luft erzielt wird.

Weitere vorteilhafte Ausführungsformen des Abgasturboladers werden im Zusammenhang mit den Unteransprüchen erörtert.

Vorteilhaft sind Ausführungsformen des Abgasturboladers, bei denen die Kühlung eine Flüssigkeitskühlung ist.

Grundsätzlich besteht die Möglichkeit, die Kühlung in Gestalt einer Luftkühlung oder einer Flüssigkeitskühlung auszuführen. Bei der Luftkühlung wird der Verdichter mit einem Gebläse versehen, wobei der Wärmeabtransport mittels einer über die Oberfläche des Verdichters geführten Luftströmung erfolgt.

Hingegen erfordert die Flüssigkeitskühlung die Ausstattung des Verdichters mit einem Kühlmittelmantel d.h. die Anordnung von das Kühlmittel durch den Verdichter führenden Kühlmittelkanälen.

Aufgrund der wesentlichen höheren Wärmekapazität von Flüssigkeiten gegenüber Luft können mit einer Flüssigkeitskühlung wesentlich größere Wärmemengen abgeführt werden als dies mit einer Luftkühlung möglich ist, weshalb Ausführungsformen des Abgasturboladers vorteilhaft sind, bei denen die Kühlung eine Flüssigkeitskühlung ist.

Vorteilhaft sind daher auch Ausführungsformen des Abgasturboladers, bei denen im Gehäuse Kühlmittelkanäle vorgesehen sind, die einen Kühlmittelmantel ausbilden und das Kühlmittel durch das Gehäuse leiten.

Dabei werden in den thermisch hochbelasteten Verdichter Kühlmittelkanäle eingebracht. Die Wärme muß dabei nicht wie bei einer Luftkühlung erst an die Verdichteroberfläche geleitet werden, um abgeführt zu werden. Vielmehr wird die Wärme bereits im Inneren des Verdichters an das Kühlmittel abgegeben.

Das Kühlmittel wird dabei vorzugsweise mittels einer im Kühlkreislauf angeordneten Pumpe gefördert, so daß es zirkuliert. Die an das Kühlmittel abgegebene Wärme wird auf diese Weise aus dem Inneren des Verdichters abgeführt und in einem Wärmetauscher dem Kühlmittel wieder entzogen.

Vorteilhaft sind Ausführungsformen des Abgasturboladers, bei denen die Flüssigkeitskühlung eine Wasserkühlung ist, wobei das Wasser vorzugsweise mit Additiven versetzt wird. Wasser als Kühlmittel hat mehrere Vorteile. Zum einen ist Wasser kostengünstig, nicht toxisch und leicht verfügbar. Zum anderen wird Wasser bereits als Prozeßmedium bei Brennkraftmaschinen verwendet, so daß durch die Verwendung von Wasser die Möglichkeit geschaffen wird, die Kühlung des Verdichters mit anderen Kühlungen einer Brennkraftmaschine zu verbinden, wie weiter unten noch erörtert werden wird.

Wie bereits oben erwähnt sind neben der Aufladung weitere Maßnahmen erforderlich, um zukünftige Grenzwerte für Schadstoffemissionen einzuhalten. Dabei ist die Abgasrückführung d. h. die Rückführung von Verbrennungsgasen aus der Abgasleitung in die Ansaugleitung zielführend. Die Abgasrückführrate $x_{AGR}$ bestimmt sich dabei wie folgt:

$$x_{AGR} = m_{AGR} / (m_{AGR} + m_{Frischluft})$$

wobei $m_{AGR}$ die Masse an zurückgeführtem Abgas und $m_{Frischluft}$ die durch den Verdichter geführte und komprimierte Frischluft bezeichnet.

Um eine deutliche Senkung der Schadstoffemissionen zu erreichen, sind hohe Abgasrückführraten erforderlich, die in der Größenordnung von $x_{AGR} \approx 60\%$ bis 70% liegen können. In der Leitung zur Abgasrückführung ist ein Absperrelement vorgesehen, mit dem die Abgasrückführrate gesteuert wird.

Die Leitung zur Abgasrückführung mündet stromabwärts des Verdichters und vorzugsweise stromabwärts eines gegebenenfalls in der Ansaugleitung angeordneten Ladeluftkühlers in die Ansaugleitung. Auf diese Weise wird der Abgasstrom nicht durch den Ladeluftkühler geführt und kann folglich diesen Kühler nicht durch Ablagerungen von im Abgasstrom enthaltenen Schadstoffen, insbesondere Rußpartikeln und Öl, verschmutzen.

In der Leitung zur Abgasrückführung wird vorzugsweise ein zusätzlicher Kühler vorgesehen, um die Temperatur des dem Verbrennungsraum zugeführten Gasgemisches möglichst niedrig zu halten. Niedrige Luftsammlertemperaturen wirken sich in Kombination mit einer hohen AGR-Rate günstig auf die Schadstoffemissionen aus.

Vorteilhaft sind Ausführungsformen des Abgasturboladers, bei denen die Kühlung des Verdichters zusammen mit einer Kühlung einer Abgasrückführung einen gemeinsamen Wärmetauscher aufweist und verwendet. Neben einem gemeinsamen Wärmetauscher können die beiden Kühlungen auch mit einer gemeinsamen Pumpe zur Förderung des Kühlmittels ausgestattet werden. Auf diese Weise ist die Anordnung eines zusätzlichen Wärmetauschers und einer zusätzlichen Pumpe nicht erforderlich, um bei Verwendung eines erfindungsgemäßen Abgasturboladers einen Kühlmittelkreislauf aufzubauen. Dadurch werden nicht nur die Kosten gesenkt, sondern insbesondere auch zusätzliches Gewicht vermieden, was den Kraftstoffverbrauch erhöhen würde.

Dadurch, daß der erfindungsgemäße Abgasturboladers gemäß der in Rede stehenden Ausführungsform keinen zusätzlichen Wärmetauscher bzw. keine zusätzliche Pumpe erfordert, entsteht auch kein zusätzlicher Bauraumbedarf im Motorraum.

Vorteilhaft sind dabei Ausführungsformen des Verdichters, bei denen die Kühlung des Verdichters mit einer Kühlung einer Abgasrückführung verbunden bzw. verbindbar ist.

Der Umstand, daß beide Kühlungen einen gemeinsamen Wärmetauscher bzw. eine gemeinsame Pumpe verwenden, muß nicht zwangsläufig bedeuten, daß diese Kühlungen ständig miteinander verbunden sind bzw. grundsätzlich miteinander verbindbar sind, wie die anschließende Ausführungsform deutlich machen wird. Dennoch ist diese Ausführungsform, bei der die beiden Kühlungen miteinander verbunden sind und einen gemeinsamen Kühlmittelkreislauf bilden, eine mögliche und vorteilhafte Ausführungsform der vorliegenden Erfindung, insbesondere aufgrund der oben beschriebenen Synergieeffekte.

Grundsätzlich kann der erfindungsgemäße Abgasturbolader einen separaten Wärmetauscher und eine separate Pumpe zur Förderung des Kühlmittels aufweisen, so daß gegebenenfalls zusätzlich zu einem Wärmetauscher und einer Pumpe einer vorhandenen Abgasrückführung bzw. Kühlung einer Abgasrückführung ein zusätzlicher Wärmetauscher und eine zusätzliche Pumpe vorzusehen sind.

Vorteilhaft sind aber insbesondere Ausführungsformen des Abgasturboladers, bei denen eine Schaltvorrichtung vorgesehen ist, welche die Kühlung des Verdichters oder die Kühlung der Abgasrückführung zur Ausbildung eines Kühlmittelkreislaufs mit einem gemeinsamen Wärmetauscher zur Ausbildung eines Kühlmittelkreislaufs verbindet, wobei die nicht mit dem Wärmetauscher verbundene Kühlung deaktiviert ist.

Gemäß dieser Ausführungsform wird entweder der Verdichter des erfindungsgemäßen Abgasturboladers durch entsprechende Schaltung der Schaltvorrichtung mit einem vorhandenen Wärmetauscher verbunden d. h. aktiviert oder aber die Kühlung der Abgasrückführung. Entweder bildet also der Verdichter zusammen mit dem Wärmetauscher einen Kühlmittelkreislauf oder aber die Kühlung der Abgasrückführung, wobei die nicht mit dem Wärmetauscher verbundene Kühlung deaktiviert ist.

In beiden Fällen d.h. Schaltungszuständen umfaßt der Kühlmittelkreislauf den gemeinsamen Wärmetauscher, was zu den oben bereits genannten Vorteilen führt.

Weitere Vorteile der in Rede stehenden Ausführungsform werden im Zusammenhang mit dem erfindungsgemäßen Verfahren erörtert und sichtbar werden.

Die zweite der Erfindung zugrunde liegende Teilaufgabe wird gelöst durch ein Verfahren zum Komprimieren von Frischluft für eine aufgeladene Brennkraftmaschine unter Verwendung eines Abgasturboladers der zuvor beschriebenen Art, das dadurch gekennzeichnet ist, daß

■ die Frischluft während des Komprimierens gekühlt wird.

Das im Zusammenhang mit dem erfindungsgemäßen Abgasturbolader Gesagte gilt ebenfalls für das erfindungsgemäße Verfahren.

Vorteilhaft sind Ausführungsformen des Verfahrens, bei denen

■ eine Schaltvorrichtung vorgesehen wird, mit der die Kühlung des Verdichters oder eine Kühlung einer Abgasrückführung zur Ausbildung eines Kühlmittelkreislaufs mit einem Wärmetauscher verbunden wird.

Vorteilhaft sind dabei Ausführungsformen des Verfahrens, bei denen

■ im unteren und mittleren Teillastbereich und bei niedrigen Drehzahlen die Schaltvorrichtung in der Weise geschaltet wird, daß nur die Kühlung der Abgasrückführung zur Ausbildung eines Kühlmittelkreislaufs mit dem Wärmetauscher verbunden wird, wobei die nicht mit dem Wärmetauscher verbundene Kühlung des Verdichters deaktiviert ist.

Wird die Brennkraftmaschine mit niedriger Drehzahl und geringer Last betrieben, sind keine hohen Ladedrücke erforderlich, aber gegebenenfalls hohe Rückführraten erwünscht. In diesem Betriebsbereich der Brennkraftmaschine erfordert der Verdichter aufgrund der vergleichsweise niedrigen Ladedrücke keine Kühlung zur Absenkung der ohnehin vergleichsweise niedrigen Prozeßtemperaturen. Hingegen ist eine Kühlung des rückgeführten Abgases zur Erzielung hoher Abgasrückführraten in diesen Betriebspunkten gegebenenfalls vorteilhaft.

Mit zunehmender Drehzahl und zunehmender Last ändert sich aber das Anforderungsprofil. Die bei hohen Drehzahlen und Lasten zu generierenden hohen Ladedrücke erfordern eine Kühlung des Verdichters, wobei die Abgasrückführung hin zu höheren Lasten und Drehzahlen in der Regel abnimmt d.h. verringert wird. Die niedrigen AGR-Raten machen eine Kühlung des rückgeführten Abgases entbehrlich.

Daher sind auch Ausführungsformen des Verfahrens vorteilhaft, bei denen

■ im oberen Teillastbereich, im Volllastbereich und bei höheren Drehzahlen die Schaltvorrichtung in der Weise geschaltet wird, daß nur die Kühlung des Verdichters zur Ausbildung eines Kühlmittelkreislaufs mit dem Wärmetauscher verbunden wird, wobei die nicht mit dem Wärmetauscher verbundene Kühlung der Abgasrückführung deaktiviert ist.

Bei welcher Drehzahl und Last ein Umschalten vorgenommen wird d. h. in welchen Betriebspunkten die Verdichtung bzw. Abgasrückführung mit einer Kühlung betrieben wird, kann vorgegeben werden.

In der Zusammenschau besteht das Prinzip dieser Verfahrensvariante darin, daß ausgehend von einer AGR-Kühlung hin zu höheren Lasten und höheren Drehzahlen ein Umschaltvorgang vorgenommen wird, in dessen Rahmen die Kühlung der Abgasrückführung deaktiviert wird und die Kühlung der Verdichtung d.h. des Verdichters aktiviert wird.

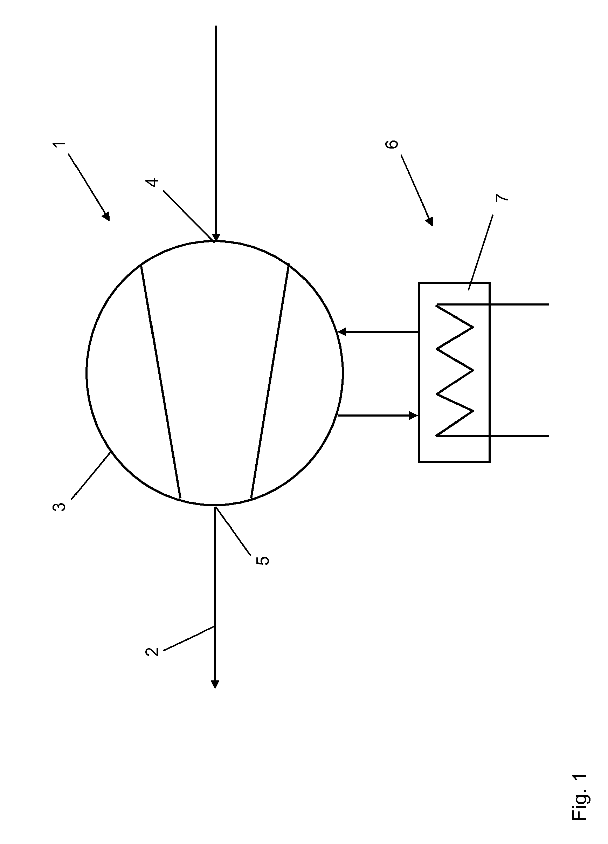

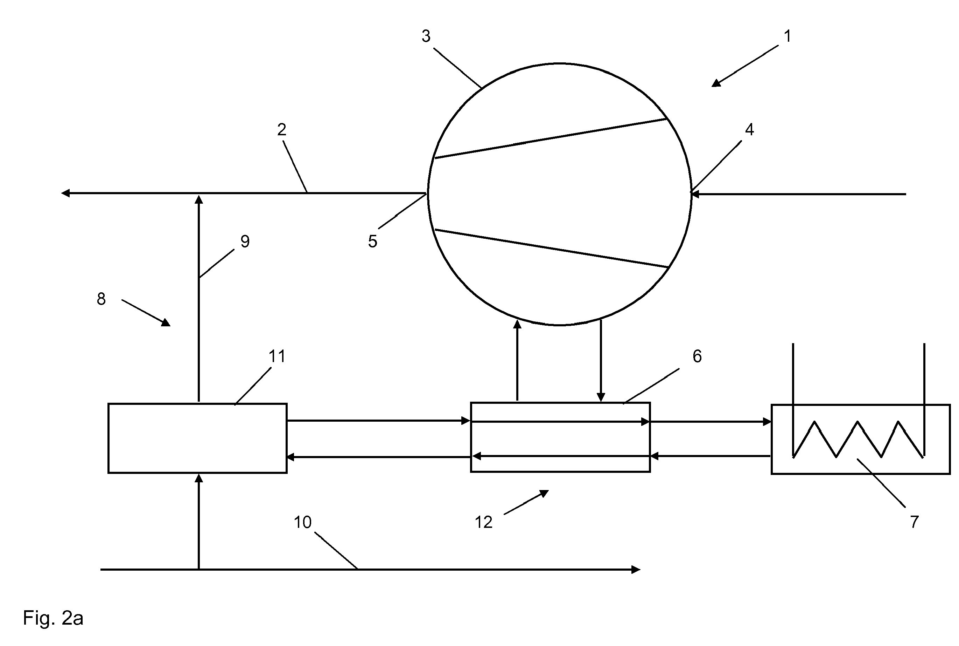

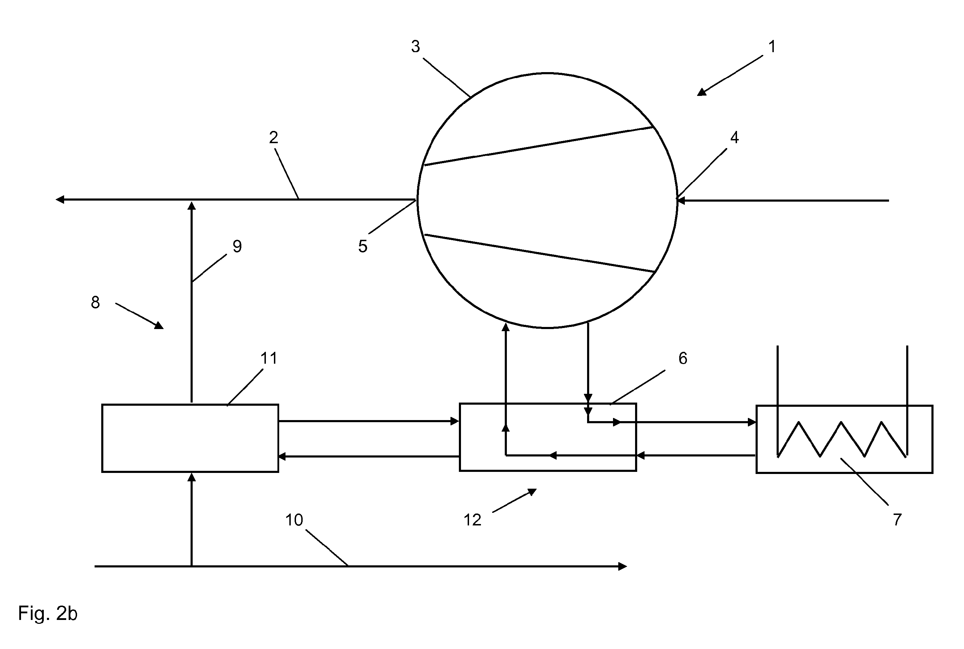

Im Folgenden wird die Erfindung anhand von zwei Ausführungsbeispielen gemäß den Figuren 1, 2a und 2b näher beschrieben. Hierbei zeigt:

Fig. 1   schematisch den Verdichter einer ersten Ausführungsform des Abgasturboladers,

Fig. 2a   schematisch den Verdichter einer zweiten Ausführungsform des Abgasturboladers in einem ersten Schaltungszustand, und

Fig. 2b   schematisch den Verdichter der in Figur 2a dargestellten zweiten Ausführungsform des Abgasturboladers in einem zweiten Schaltungszustand.

Figur 1 zeigt den Verdichter 1 einer ersten Ausführungsform des Abgasturboladers in einer schematischen Darstellung. Die Turbine des Abgasturboladers ist nicht dargestellt.

Der Verdichter 1 ist in einer Ansaugleitung 2 der Brennkraftmaschine angeordnet, die zur Versorgung der Brennkraftmaschine mit Frischluft bzw. Frischgemisch dient. Der Verdichter 1 verfügt über einen Eintritt 4 für die zu verdichtende Frischluft und einen Austritt 5 für die verdichtete Luft.

Der Verdichter 1 weist eine Kühlung 6 zum Kühlen der Frischluft auf, wobei im Gehäuse 3 Kühlmittelkanäle vorgesehen sind, die einen Kühlmittelmantel ausbilden und das Kühlmittel durch das Gehäuse 3 leiten (nicht dargestellt).

Der Verdichter 1 bzw. die Kühlmittelkanäle des Gehäuses 3 sind zur Ausbildung eines Kühlmittelkreislaufs bzw. einer Kühlung 6 mit einem Wärmetauscher 7 verbunden, in welchem das Kühlmittel die im Verdichter 1 aufgenommene Wärme wieder abgibt.

Figur 2a zeigt schematisch den Verdichter 1 einer zweiten Ausführungsform des Abgasturboladers in einem ersten Schaltungszustand. Figur 2b zeigt den Verdichter 1 dieser zweiten Ausführungsform in einem zweiten Schaltungszustand.

Wie Figur 2a entnommen werden kann, ist der Verdichter 1 in einer Ansaugleitung 2 einer Brennkraftmaschine angeordnet, wobei ein Eintritt 4 für die zu verdichtende Frischluft und ein Austritt 5 für die verdichtete Luft vorgesehen sind.

Zur Rückführung heißer Abgase ist eine Abgasrückführung 8 vorgesehen. Hierzu zweigt eine Leitung 9 aus einer Abgasleitung 10 ab, wobei diese Leitung 9 stromabwärts des Verdichters 1 in die Ansaugleitung 2 mündet. Auf diese Weise wird der rückgeführte Abgasstrom nicht durch den Verdichter 1 geführt.

In der Leitung 9 zur Abgasrückführung 8 ist eine Kühlung 11 vorgesehen, mit der die Temperatur des heißen rückzuführenden Abgasstromes abgesenkt werden kann. Zur Steuerung der AGR-Rate kann in der Rückführleitung 9 ein Absperrelement, insbesondere ein AGR-Ventil, vorgesehen werden, und dies sowohl stromabwärts als auch stromaufwärts der Kühlung 11 (nicht dargestellt). Der Verdichter 1 ist ebenfalls mit einer Kühlung 6 ausgestattet.

Es ist eine Schaltvorrichtung 12 vorgesehen, welche die Kühlung 6 des Verdichters 1 oder aber die Kühlung 11 der Abgasrückführung 8 zur Ausbildung eines Kühlmittelkreislaufs mit einem gemeinsamen Wärmetauscher 7 zur Ausbildung eines Kühlmittelkreislaufs verbindet, wobei die nicht mit dem Wärmetauscher 7 verbundene Kühlung 6, 11 deaktiviert ist.

Wird die Brennkraftmaschine mit niedriger Drehzahl und geringer Last betrieben, werden hohe Rückführraten angestrebt, wohingegen die mittels Verdichter 1 generierten Ladedrücke vergleichsweise niedrig sind. Bei einem derartigen Betrieb der Brennkraftmaschine ist eine Kühlung 6 des Verdichters 1 zur Absenkung der Prozeßtemperatur d. h. der Ladelufttemperatur nicht erforderlich. Hingegen ist eine Kühlung 11 des rückgeführten Abgases vorteilhaft.

Die Schaltvorrichtung 12 wird dabei in der Weise geschaltet, daß nur die Kühlung 11 der Abgasrückführung 8 zur Ausbildung eines Kühlmittelkreislaufs mit dem Wärmetauscher 7 verbunden ist, wobei die nicht mit dem Wärmetauscher 7 verbundene Kühlung 6 des Verdichters 1 deaktiviert ist (siehe Figur 2a).

Mit zunehmender Drehzahl und zunehmender Last nimmt der Ladedruck zu und die rückgeführte Abgasmenge ab. Dies erfordert eine Kühlung 6 des Verdichters 1. Aufgrund der niedrigen AGR-Raten ist eine Kühlung 11 des rückgeführten Abgases entbehrlich.

Die Schaltvorrichtung 12 wird daher mit zunehmender Drehzahl und zunehmender Last in der Weise geschaltet, daß nur die Kühlung 6 des Verdichters 1 zur Ausbildung eines Kühlmittelkreislaufs mit dem Wärmetauscher 7 verbunden ist, wobei die nicht mit dem Wärmetauscher 7 verbundene Kühlung 11 der Abgasrückführung 8 deaktiviert ist.

**Bezugszeichen**

| | |
|---|---|
| 1 | Verdichter |
| 2 | Ansaugleitung |
| 3 | Gehäuse |
| 4 | Eintritt für die zu verdichtende Frischluft |
| 5 | Austritt für die verdichtete Frischluft |
| 6 | Kühlung des Verdichters |
| 7 | Wärmetauscher |
| 8 | Abgasrückführung |
| 9 | Leitung zur Abgasrückführung |
| 10 | Abgasleitung |
| 11 | Kühlung der Abgasrückführung |

| | |
|---|---|
| 12 | Schaltvorrichtung |
| AGR | Abgasrückführung |
| $m_{AGR}$ | Masse an zurückgeführtem Abgas |
| $m_{Frischluft}$ | Masse an zugeführter Frischluft bzw. Verbrennungsluft |
| $x_{AGR}$ | Abgasrückführrate |

**Patentansprüche**

1. Abgasturbolader mit einem Verdichter (1) zum Komprimieren von Frischluft für eine aufgeladene Brennkraftmaschine, wobei der Verdichter (1) ein Gehäuse (3), einen Eintritt (4) für die zu verdichtende Frischluft und einen Austritt (5) für die verdichtete Frischluft aufweist,
**dadurch gekennzeichnet, daß**
das Gehäuse (3) des Verdichters (1) eine Kühlung (6) zum Kühlen der Frischluft aufweist.

2. Abgasturbolader nach Anspruch 1,
**dadurch gekennzeichnet, daß**
die Kühlung (6) eine Flüssigkeitskühlung ist.

3. Abgasturbolader nach Anspruch 2,
**dadurch gekennzeichnet, daß**
die Flüssigkeitskühlung eine Wasserkühlung ist.

4. Abgasturbolader nach Anspruch 2 oder 3,
**dadurch gekennzeichnet, daß**
im Gehäuse (3) Kühlmittelkanäle vorgesehen sind, die einen Kühlmittelmantel ausbilden und das Kühlmittel durch das Gehäuse (3) leiten.

5. Abgasturbolader nach einem der vorherigen Ansprüche,
**dadurch gekennzeichnet, daß**
die Kühlung (6) des Verdichters (1) zusammen mit einer Kühlung (11) einer Abgasrückführung (8) einen gemeinsamen Wärmetauscher (7) aufweist und verwendet.

6. Abgasturbolader nach einem der vorherigen Ansprüche,
**dadurch gekennzeichnet, daß**
die Kühlung (6) des Verdichters (1) mit einer Kühlung (11) einer Abgasrückführung (8) verbunden bzw. verbindbar ist.

7. Abgasturbolader nach Anspruch 5 oder 6,
**dadurch gekennzeichnet, daß**
eine Schaltvorrichtung (12) vorgesehen ist, welche die Kühlung (6) des Verdichters (1) oder die Kühlung (11) der Abgasrückführung (8) zur Ausbildung eines Kühlmittelkreislaufs mit dem gemeinsamen Wärmetauscher (7) zur Ausbildung eines Kühlmittelkreislaufs verbindet, wobei die nicht mit dem Wärmetauscher (7) verbundene Kühlung (6, 11) deaktiviert ist.

8.  Verfahren zum Komprimieren von Frischluft für eine aufgeladene Brennkraftmaschine unter Verwendung eines Abgasturboladers nach einem der vorherigen Ansprüche,
    **dadurch gekennzeichnet, daß**

    ■ die Frischluft während des Komprimierens gekühlt wird.

9.  Verfahren nach Anspruch 8,
    **dadurch gekennzeichnet, daß**

    ■ eine Schaltvorrichtung (12) vorgesehen wird, mit der die Kühlung (6) des Verdichters (1) oder eine Kühlung (11) einer Abgasrückführung (8) zur Ausbildung eines Kühlmittelkreislaufs mit einem Wärmetauscher (7) verbunden wird.

10. Verfahren nach Anspruch 9,
    **dadurch gekennzeichnet, daß**

    ■ im unteren und mittleren Teillastbereich und bei niedrigen Drehzahlen die Schaltvorrichtung (12) in der Weise geschaltet wird, daß nur die Kühlung (11) der Abgasrückführung (8) zur Ausbildung eines Kühlmittelkreislaufs mit dem Wärmetauscher (7) verbunden wird, wobei die nicht mit dem Wärmetauscher (7) verbundene Kühlung (6) des Verdichters (1) deaktiviert ist.

11. Verfahren nach Anspruch 9 oder 10,
    **dadurch gekennzeichnet, daß**

    ■ im oberen Teillastbereich, im Volllastbereich und bei höheren Drehzahlen die Schaltvorrichtung (12) in der Weise geschaltet wird, daß nur die Kühlung (6) des Verdichters (1) zur Ausbildung eines Kühlmittelkreislaufs mit dem Wärmetauscher (7) verbunden wird, wobei die nicht mit dem Wärmetauscher (7) verbundene Kühlung (11) der Abgasrückführung (8) deaktiviert ist.

EP 2 017 448 A1

Fig. 1

Fig. 2a

Fig. 2b

EP 2 017 448 A1

**Europäisches Patentamt**

**EUROPÄISCHER RECHERCHENBERICHT**

Nummer der Anmeldung

EP 07 11 2547

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2006/054939 A (SCANIA CV ABP [SE]; KARDOS ZOLTAN [SE]) 26. Mai 2006 (2006-05-26) * Seite 10, Zeile 1 - Zeile 10; Abbildungen 1,2 * ----- | 1-11 | INV. F02B29/04 F02M25/07 |
| A | FR 2 856 747 A (VALEO THERMIQUE MOTEUR [FR]) 31. Dezember 2004 (2004-12-31) * Seite 8, Zeile 4 - Seite 10, Zeile 2; Abbildungen 1-18 * ----- | 1-11 | |
| A | WO 03/069149 A (VALEO THERMIQUE MOTEUR [FR]; GUERRERO PASCAL [FR]) 21. August 2003 (2003-08-21) * Spalte 7, Zeile 21 - Spalte 8, Zeile 36; Abbildung 2 * ----- | 1-11 | |

RECHERCHIERTE SACHGEBIETE (IPC)

F02B
F02M

Der vorliegende Recherchenbericht wurde für alle Patentansprüche erstellt

| Recherchenort | Abschlußdatum der Recherche | Prüfer |
|---|---|---|
| Den Haag | 5. Dezember 2007 | Raposo, Jorge |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 07 11 2547

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2007

| Im Recherchenbericht angeführtes Patentdokument | Datum der Veröffentlichung | Mitglied(er) der Patentfamilie | | Datum der Veröffentlichung |
|---|---|---|---|---|
| WO 2006054939 A | 26-05-2006 | EP | 1819911 A1 | 22-08-2007 |
| | | SE | 527869 C2 | 27-06-2006 |
| | | SE | 0402811 A | 18-05-2006 |
| FR 2856747 A | 31-12-2004 | AT | 355453 T | 15-03-2006 |
| | | DE | 602004005041 T2 | 08-11-2007 |
| | | EP | 1636478 A1 | 22-03-2006 |
| | | EP | 1646780 A1 | 19-04-2006 |
| | | ES | 2285511 T3 | 16-11-2007 |
| | | WO | 2005001271 A1 | 06-01-2005 |
| | | WO | 2005001272 A1 | 06-01-2005 |
| | | KR | 20060063807 A | 12-06-2006 |
| | | US | 2006278377 A1 | 14-12-2006 |
| WO 03069149 A | 21-08-2003 | AU | 2003214355 A1 | 04-09-2003 |
| | | EP | 1474601 A1 | 10-11-2004 |
| | | FR | 2835884 A1 | 15-08-2003 |
| | | JP | 2005517857 T | 16-06-2005 |
| | | US | 2006236987 A1 | 26-10-2006 |
| | | US | 2005034712 A1 | 17-02-2005 |

EPO FORM P0461

Für nähere Einzelheiten zu diesem Anhang : siehe Amtsblatt des Europäischen Patentamts, Nr.12/82